# EUROPEAN PATENT APPLICATION

(11) **EP 2 913 633 A1**
(43) Date of publication of application: **02.09.2015**
(21) Application number: 14197828.8
(22) Date of filing: 12.12.2014
(51) Int. Cl.: G01C 21/16, G01S 19/42, G01S 19/49

(54) **Filtering gnss-aided navigation data to help combine sensor and a priori data**

(30) Priority: 27.02.2014 US 201414192361
(71) Applicant: Honeywell International Inc., Morristown, NJ 07962-2245 (US)
(72) Inventor: Mckitterick, John B., Morristown, NJ New Jersey 07962-2245 (US); Hawkinson, Wesley J., Morristown, NJ New Jersey 07962-2245 (US)
(74) Representative: Houghton, Mark Phillip

(57) **Abstract**

Systems and methods for filtering GNSS-Aided navigation data for helping combine sensor data and *a priori* data are provided. In at least one embodiment, the method comprises identifying an un-smoothed navigation solution inclusive of a navigation system reset, wherein a value is associated with the navigation system reset. The value associated with the navigation system reset is then subtracted from the un-smoothed navigation solution to generate an initial navigation solution. Further, the value associated with the navigation system reset is incrementally added to the initial navigation solution at a configurable rate to generate a smoothed navigation solution.

## Description

### STATEMENT REGARDING FEDERALLY SPONSORED RESEARCH OR

### DEVELOPMENT

This invention was made with Government support under contract No. HR0011-11-C-0138 awarded by DARPA. The Government has certain rights in the invention.

### BACKGROUND

In degraded visual environments (DVE), such as a brownout, helicopter pilots cannot maintain good situational awareness due to lack of visibility. One way to maintain better situational awareness is to use a synthetic vision system. A synthetic vision system displays, on monitors in front of a pilot, a representative scene of the actual physical scene in front of the aircraft. The synthetic vision system (SVS) can create the 3-D representative scene by combining *a priori* data, such as terrain maps, and global navigation satellite system (GNSS) and/or sensor data, such as Radio Detection and Ranging (RADAR) or Light Detection and Ranging (LIDAR). In order to combine the data sets, they must be correlated, which can present problems in conventional systems.

### SUMMARY

Systems and methods for filtering GNSS-Aided navigation data for helping combine sensor data and *a priori* data are provided. In at least one embodiment, the method comprises identifying an un-smoothed navigation solution inclusive of a navigation system reset, wherein a value is associated with the navigation system reset. The value associated with the navigation system reset is then subtracted from the un-smoothed navigation solution to generate an initial navigation solution. Further, the value associated with the navigation system reset is incrementally added to the initial navigation solution at a configurable rate to generate a smoothed navigation solution.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a flow diagram of one embodiment of an example method of filtering GNSS-aided navigation data to help the fusion of sensor and a priori data.
Figure 2 is a block diagram of one embodiment of an example system that uses the filtering of GNSS-aided navigation data to help the fusion of sensor and a *priori* data.
Figures 3A-3C are examples of un-smoothed navigation solutions without applying the systems and methods disclosed herein and smoothed navigation solutions that resulted from applying the systems and methods disclosed herein.
Figures 3D-3F are examples of the changes in position coordinates due of the un-smoothed navigation solutions and smoothed navigation solutions in Figures 3A-3C.
In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

As discussed above, a way to create 3-D representative scenes for a synthetic vision system is to combine *a priori* data with sensor data. But in order to combine the sensor data with the *a priori* data, navigation data is needed because the sensor data must be correlated with real-world coordinates. Navigation data can be provided using a navigation system, for example.

Exemplary navigation systems provide navigation solutions including position, velocity, and/or attitude data of objects, including aircraft and other vehicles. Some navigation solutions are based on data from inertial sensors, such as accelerometers that measure linear velocity and gyroscopes that measure angular rates. Accelerometers and gyroscopes inherently have errors. These errors build up over time. In order to correct for errors in a navigation solution caused by errors in the accelerometer and/or gyroscope data, aiding devices can be used. A few exemplary aiding devices that can be used are a GNSS receiver and/or sensors, such as RADAR and LIDAR. When a GNSS receiver and/or sensors are used as aiding devices, navigation systems can blend data received from the aiding devices with the navigation solution based on inertial sensor data using a Kalman filter. Blending together an inertial navigation solution with aiding device data works well at removing inertial errors; however, blending these data sets can cause other problems.

One problem with blending the inertial navigation solution with the GNSS data is that under certain conditions, the output of the GNSS/INS system is not smooth because the GNSS-aiding can and does result in discrete discontinuities in the reported position as the GNSS corrects the INS system, (also referred to herein as resetting the navigation system). As used herein, GNSS resets are when the GNSS corrects the navigation solution of the navigation system, so that on an interval basis (e.g., every second), the GNSS navigation solution is taken as the actual navigation solution of the GNSS/INS system. However, the GNSS navigation solution is not always accurate and can result in discrete discontinuities. Some of the conditions that can lead to inaccurate GNSS navigation solutions and as a result discontinuities are coronal mass ejections, varying ionospheric conditions or multipath signals in the GNSS. As a result, the reported position of the aircraft using the GNSS/INS system will change instantaneously, even though the actual position of the aircraft had not changed in the same way. These discrete discontinuities, which can be significant and have been recorded to be as great as 40 meters during some conditions, make it difficult or impossible to correlate the sensor data with the *a priori* data. The reason why the data is difficult to correlate is because part of the sensor data will be correlated using the navigation data prior to the jump, and part of the sensor data will be correlated using the navigation data after the jump. Moreover, the correlated data using conventional methods also results in a scene for a synthetic vision system (SVS) that shifts when there are discontinuities in the navigation solutions. This can be very disconcerting to a pilot because the shifts can result in a strobe-like effect that can render the SVS useless in some circumstances. The embodiments described herein, however, enable smoothing the GNSS resets so that a better correlation can be achieved that results in a smooth SVS scene for a pilot, while still maintaining the longer term accuracy required of the navigation system.

Specifically, described below are examples of how the embodiments smooth GNSS resets that result in discontinuities of the navigation solution above a threshold. First, if there is a discrete jump in the reported position of the blended GNSS/INS navigation solution that is above a threshold, then an un-smoothed navigation solution can be identified. Stated another way, a reset resulting in an un-smoothed navigation solution can be identified by comparing the GNSS/INS data with a reference navigation solution. When the navigation solution shifts by a certain threshold in the GNSS/INS data, but not in the reference navigation solution, a GNSS reset can be identified. These resets that result in GNSS/INS navigation solutions which have shifts (i.e., discontinuities) above a certain threshold will be referred to herein as unsmoothed navigation solutions. The threshold for the shift in the navigation solution in these embodiments can be configurable. In some embodiments, the reference navigation solution can be provided by a purely GNSS system. In other embodiments, the reference navigation system can be provided by a purely INS system. In other embodiments, the reference navigation solution can be provided by sensors, such as RADAR and LIDAR. Once a navigation reset is identified, the size of the navigation reset can be the difference between the navigation solution before and after the reset. Once the size of the reset is determined, a value associated with the reset can be assigned. In some embodiments, the value associated with the reset can be a vector quantity (e.g., change in x, y and z positions and rotations around each axis) and equal to the size of the reset. In other examples, the value associated with the reset can be a single quantity and less than the size of the reset. More detail about the value associated with the reset is given below. After an un-smoothed navigation solution is identified and the value associated with the navigation system reset is assigned, the value associated with the navigation system reset can be subtracted from the unsmoothed navigation solution to yield a navigation solution without the reset and is referred to herein as the initial navigation solution. Once the value is subtracted from the un-smoothed navigation solution to create the initial navigation solution, the value can be incrementally added back into the navigation solution, so as to create a smooth navigation solution with the reset data included. Smooth navigation solutions as used herein are navigation solutions which do not have shifts (i.e., discontinuities) in the navigation solution above a certain threshold. Finally, once the smoothed navigation solution is created, the sensor data and *a priori* data can be correlated, using techniques known to one having skill in the art.

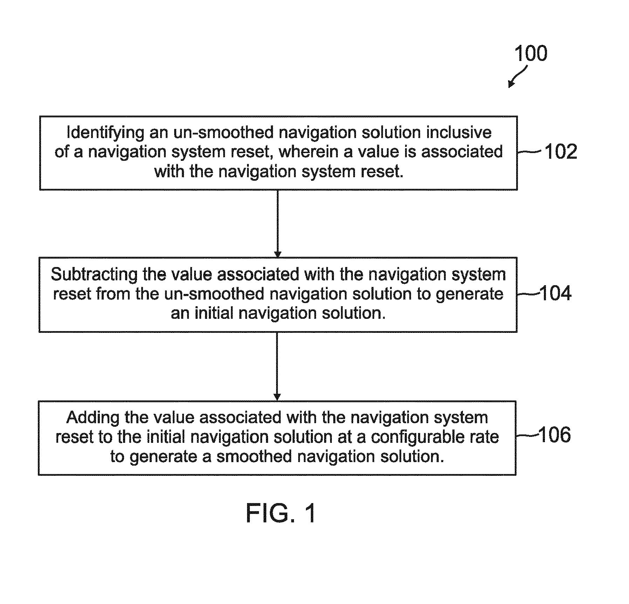

Figure 1 is a flow diagram of an example method 100 of filtering GNSS-aided navigation data to help the fusion of sensor and *a priori* data. Method 100 includes identifying an un-smoothed navigation solution inclusive of a navigation system reset, wherein a value is associated with the navigation system reset (block 102); subtracting the value associated with the navigation system reset from the un-smoothed navigation solution to generate an initial navigation solution (block 104); and, adding the value associated with the navigation system reset back to the initial navigation solution at a configurable rate to generate a smoothed navigation solution (block 106). Each of these blocks are described in more detail below.

First, with respect to method 100, an un-smoothed navigation solution inclusive of a navigation system reset is identified, wherein a value is associated with the navigation system reset (block 102). As discussed above, a navigation system can include an INS system aided by a GNSS system. As stated above, the GNSS system aids the INS system by occasionally correcting (also referred to herein as resetting) the INS navigation solution. After a GNSS reset, the GNSS/INS blended system can be compared to another reference system, such as for example a purely GNSS system or purely INS system. That is, the GNSS/INS blended navigation solution is compared to the navigation solution of the reference system by determining the differences in the navigation solutions between the two systems. If the GNSS/INS blended navigation solution is not equal to the reference system's navigation solution after a reset and the difference between the navigation solutions is above a threshold, an un-smoothed navigation solution can be identified that is inclusive of a navigation system reset. That is, if the reference system's navigation solution and the GNSS/INS navigation solution are different when the GNSS resets the GNSS/INS system's navigation solution and the difference is above a threshold, the navigation solution for the system can be un-smoothed and therefore have discontinuities. In an example, if the GNSS system resets the navigation solution of the system inaccurately, then the navigation solution for the system can have discontinuities. As described above, a GNSS system can reset the navigation solution for a system inaccurately when perhaps there are coronal mass ejections, varying ionospheric conditions or multipath signals in the GNSS. In some embodiments, not every un-smoothed navigation solution will need to be identified. In situations where not every un-smoothed navigation solution needs to be identified, only the differences between the navigation solution of the GNSS/INS blended system and the navigation solution of the reference system that are above a configurable threshold can be identified. For example, if the threshold is .5 meters, then only the navigation solutions of the GNSS/INS system that differ from the navigation solutions of the reference system by more than .5 meters will be identified.

In addition to identifying an un-smoothed navigation solution, a value is associated with the navigation system reset (block 102). In some embodiments, the value that is associated with navigation system reset is equal to the size of the reset, i.e., the difference in the navigation solution before and after the reset. For example, if a navigation system reset results in a change in the vertical position of the navigation solution by 4 meters, then the value associated with the navigation system reset could be equal to 4 meters. In other embodiments, the value that is associated with the navigation system reset does not equal the change in the navigation solution due to the navigation system reset, but can instead be more or less than the change in the navigation system reset. For example, if a navigation system reset results in a change in the vertical position of the navigation solution by 4 meters, then the value associated with the navigation system reset could be equal to 3 meters. In some embodiments, this may be useful if there was a previous reset in the navigation solution that required smoothing that was still being incrementally added in. For example, if there was a first reset that resulted in a change in the vertical position of the navigation solution by -3 meters and only -2 meters was added back in to create the first smoothed navigation solution before there was a second reset that resulted in a change in the vertical position of the navigation solution by 4 meters, then the second value associated with the second reset could be equal to 3 meters, which would generate the final smoothed navigation solution.

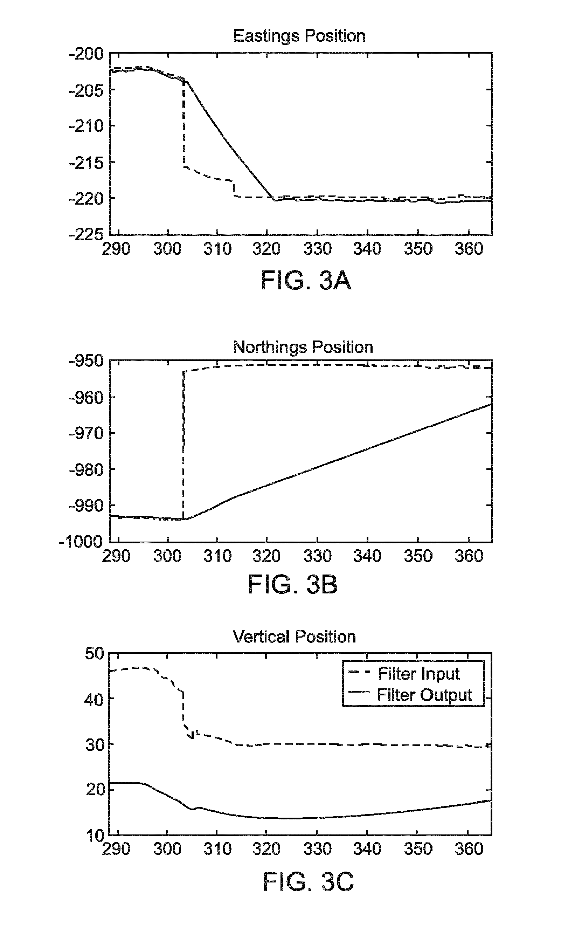

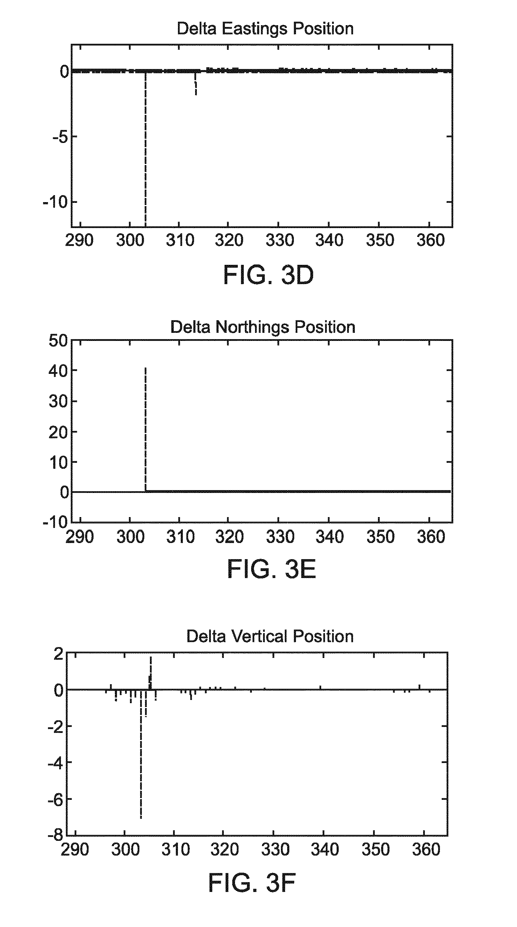

An example of a GNSS navigation system reset that resulted in a discontinuity due to a coronal mass ejection is shown in Figures 3A-3F. In Figures 3A-3C, the position coordinates, which resulted in a discontinuity (i.e., an unsmoothed navigation solution) is shown by the dashed line. The position coordinates, after the systems and methods discussed in this disclosure are applied (i.e., a smoothed navigation solution) is shown by the solid lines in Figures 3A-3C. In Figures 3D-3F, the moment to moment change (in meters) in the un-smoothed position coordinates of Figures 3A-3C is shown by the dashed lines. The solid lines show the moment to moment change in the smoothed position coordinates of Figures 3A-3C. For example, in Figure 3A, the shift in the eastings position was from roughly -205 to -216 meters, which corresponded to a change in the eastings position of roughly 11 meters, as shown in Figure 3D. In Figure 3B, the northings position changed from -990 to roughly -950 meters. This corresponded to a change in the northings position of roughly 40 meters, as can be seen in Figure 3E. In Figure 3C, the shift in the vertical position was from roughly 40 to roughly 33, which corresponded to a change in the vertical position of roughly 7 meters, as shown in Figure 3F. As can be seen from these examples, the discontinuities that result from various conditions can be dramatic and cause problems if one is trying to correlate sensor data with *a priori* data.

Next, with respect to method 100, the value associated with the navigation system reset is subtracted from the un-smoothed navigation solution to generate an initial navigation solution (block 104). That is, the un-smoothed navigation solution is shifted by an amount equal to the value. For example, referring to Figures 3A-3C, if an un-smoothed navigation solution had the shifts in those figures and the value associated with the navigation solution reset was equal to the shift in the navigation solution due to the reset, then the initial navigation solution would be equal to the navigation solution before the reset. That is, the vertical position of the un-smoothed navigation solution was roughly 33 meters and the value associated with the navigation system reset is -7 meters, then the initial navigation solution would be 40 meters. Similarly, the eastings and northings position would shift by the amount that each position coordinate had changed, respectively, to create the initial navigation solution for each position coordinate.

After an initial navigation solution is created, the value of the navigation system reset is added to the initial navigation solution to generate a smoothed navigation solution (block 106). As stated above, a smooth navigation solution as used herein is a navigation solution which does not have a shift (i.e., discontinuities) in the navigation solution above a certain threshold. The value associated with the reset (also referred to as "value") can be added back in a variety of ways. In one embodiment, the rate at which the value is added back into the navigation solution can be a constant rate and therefore the time allocated for adding the value is a function of the size of the value. For example, if a value associated with a reset is 5 meters, and the system was configured to add values at a rate of 2 meter for every 1 second, then the value would take 2.5 seconds to be added back into the navigation solution. Whereas in another example of this embodiment, where the value was 3 meters, the value would be added back in after 1.5 seconds. In another embodiment, the value can be added back at a constant time. That is, if each value is added back over 5 seconds, then the rate at which the value is added back is dependent on the size of the value. For example, if the value is 5 meters, then the value is added back at 1 meter per second; whereas if the value is 10 meters, then the value is added back at 2 meters per second. Under each of these methods, the rate at which the value is added back in will result in changes of the navigation solution below the threshold for identifying an unsmoothed navigation solution. Again, these are only examples of how the values may be added back into the system and are not meant to be limiting.

Going back to Figures 3D-3F, after an exemplary embodiment of method 100 was applied, one can see that the discontinuities that occurred in the un-smoothed navigation solution were not present in the smoothed navigation solution. For example, looking at the solid lines in Figures 3D-3F, there were not any changes in the eastings, northings or vertical positions that resulted in sizeable jumps and as a result, a smoothed navigation solution was created (i.e. the solid line is trending near a change in zero meters throughout). In some embodiments, these smoothed navigation solutions can then be used in creating a 3-D representative scene for a synthetic vision system, instead of using the un-smoothed navigation solutions that are used in conventional systems and methods.

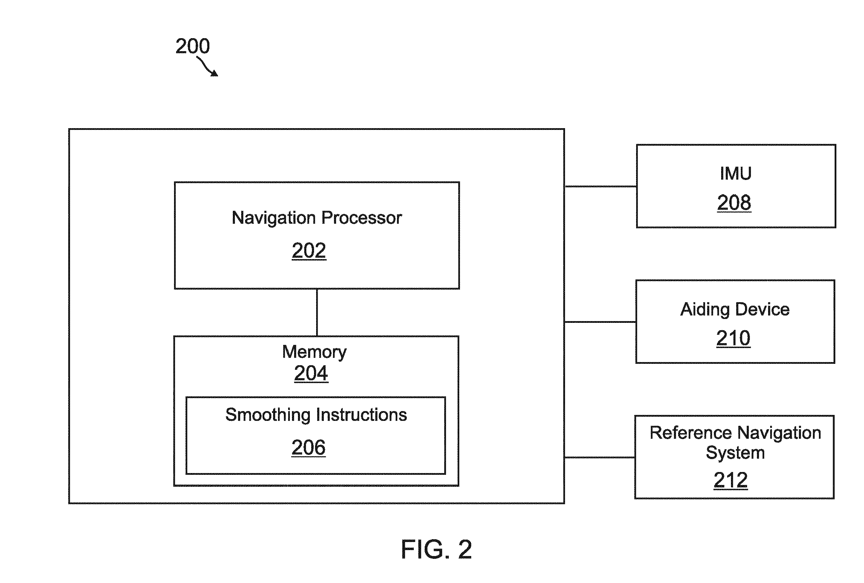

Figure 2 is a block diagram of an example system 200 that uses the filtering of GNSS-aided navigation data to help the fusion of sensor and *a priori* data. The system 200 includes at least one inertial measurement unit (IMU) 208 configured to provide inertial measurements, at least one aiding device 210 configured to generate aiding device measurement data, a memory device 204 configured to store computer readable instructions 206 (also referred to herein as smoothing instructions), and a navigation processor 202 configured to provide a navigation solution, wherein the navigation processor 202 is coupled to receive the inertial measurement from the inertial measurement unit 208 and the aiding device measurement data from the aiding device 210.

The memory's computer readable instructions 206 also direct the navigation processor 202 to: identify an un-smoothed navigation solution inclusive of a navigation system reset, subtract the value associated with the navigation system reset form the un-smoothed navigation solution to generate an initial navigation solution, and incrementally add the value associated with the navigation system reset to the initial navigation solution at a configurable rate to generate a smoothed navigation solution. In some embodiments, the value associated with the navigation system reset comprises adding the value at a constant rate. Moreover, in some embodiments, the value associated with the navigation system reset is equal to the change in the navigation solution due to the navigation system reset. In other embodiments, the value associated with the navigation system reset is less than the change in the navigation solution due to the navigation system reset. Also, in some embodiments, the value associated with the navigation system reset is above a threshold. These instructions 206 can have some or all of the same functions as the method 100 described above. Moreover, the system 200 can function similarly to the exemplary navigation systems described above.

In addition, the computer readable instructions 206 on the memory 204 can direct the navigation processor 202 to identify an un-smoothed navigation solution by instructing the navigation processor 202 to compare the un-smoothed navigation solution with a navigation solution using a reference navigation system 212. Even though the reference navigation system 212 is shown as a separate device in Figure 2, it could be part of the same system. In some embodiments, the reference navigation system 212 can be a global navigation satellite system. In some other embodiments, the navigation system 212 can be an inertial navigation system. In some other embodiments, the reference navigation system 212 can be sensors, such as RADAR and LIDAR. Similarly, these instructions 206 can have some or all of the same functions as the method 100 described above.

The IMU 208 may be a combination of sensor devices that are configured to sense motion and output data corresponding to the sensed motion. In one embodiment, the IMU 208 comprises a set of 3-axis gyroscopes and accelerometers that determine information about motion in any of six degrees of freedom (that is, lateral motion, in three perpendicular axes and rotation about three perpendicular axes). The aiding device 210 can be any of the devices described above, such as a GNSS receiver and/or sensors, such as RADAR and LIDAR.

The phrase "navigation processor" 202, as used herein, generally refers to an apparatus for calculating a navigation solution by processing the motion information received from IMU 208 and other sources of navigation data, such as the aiding device 210. As used herein, a navigation solution contains information about the position, velocity, and attitude of the object at a particular time. Further, the navigation processor 202 may be implemented through digital computer systems, microprocessors, general purpose computers, programmable controllers and field programmable gate arrays FPGAs) or application-specific integrated circuits (ASICs). The navigation processor 202 executes program instructions that reside on memory 204, which when executed by the navigation processor 202 cause the navigation processor 202 to implement embodiments described in the present disclosure.

Memory 204 can be implemented as any available media that can be accessed by a general purpose or special purpose computer or processor, or any programmable logic device. Suitable processor-readable media may include storage or memory such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

As a result of the systems and methods disclosed herein, the *a priori* data can be correlated with the GNSS and sensor data much easier than in conventional methods because there is no longer discontinuities in the GNSS and sensor data. Moreover, due to the systems and methods described herein, the synthetic vision system (SVS) that uses the correlated data will be smooth, whereas using conventional methods, the scene of the synthetic vision system would shift when there was a discontinuity in the GNSS and sensor data. As a result, the SVS that uses the systems and methods disclosed herein is much more useful to a pilot than the SVS that uses conventional implementations to coordinate the *a prior* data with the GNSS and sensor data.

### EXAMPLE EMBODIMENTS

Example 1 includes a method for improving a navigation solution, the method comprising: identifying an un-smoothed navigation solution inclusive of a navigation system reset, wherein a value is associated with the navigation system reset; subtracting the value associated with the navigation system reset from the unsmoothed navigation solution to generate an initial navigation solution; and incrementally adding the value associated with the navigation system reset to the initial navigation solution at a configurable rate to generate a smoothed navigation solution.

Example 2 includes the method of Example 1, wherein identifying the unsmoothed navigation solution comprises comparing the un-smoothed navigation solution with a navigation solution using a reference navigation system.

Example 3 includes the method of Example 2, wherein the reference navigation system includes at least one of: a global navigation satellite system, an inertial navigation system, a Radio Detection and Ranging sensor, and a Light Detection and Ranging sensor.

Example 4 includes the method of any of Examples 1-3, wherein the smoothed navigation solution is used in creating a scene for a synthetic vision system.

Example 5 includes the method of any of Examples 1-4, wherein incrementally adding the value associated with the navigation system reset involves adding the value at a constant rate.

Example 6 includes the method of any of Examples 1-5, wherein the value associated with the navigation system reset is equal to the change in the navigation solution due to the navigation system reset.

Example 7 includes the method of any of Examples 1-6, wherein the value associated with the navigation system reset is less than the change in the navigation solution due to the navigation system reset.

Example 8 includes the method of any of Examples 1-7, wherein identifying the un-smoothed navigation solution inclusive of a navigation system reset includes identifying only the navigation system resets that are above a threshold.

Example 9 includes a navigation system comprising: at least one inertial measurement unit configured to provide inertial measurements; at least one aiding device configured to generate aiding device measurement data; a memory device configured to store computer readable instructions, and a navigation processor configured to provide a navigation solution, wherein the navigation processor is coupled to receive the inertial measurements from the inertial measurement unit and the aiding device measurement data from the aiding device, wherein computer readable instructions direct the navigation processor to: identify an un-smoothed navigation solution inclusive of a navigation system reset wherein a value is associated with the navigation system reset; subtract the value associated with the navigation system reset from the un-smoothed navigation solution to generate an initial navigation solution; and incrementally add the value associated with the navigation system reset to the initial navigation solution at a configurable rate to generate a smoothed navigation solution.

Example 10 includes the navigation system of Example 9, wherein identifying an un-smoothed navigation solution comprises comparing the un-smoothed navigation solution with a navigation solution using a reference navigation system.

Example 11 includes the navigation system of Example 10, wherein the reference navigation system includes at least one of: a global navigation satellite system, an inertial navigation system, a Radio Detection and Ranging sensor, and a Light Detection and Ranging sensor.

Example 12 includes the navigation system of any of Examples 9-11, wherein the smoothed navigation solution is used in creating a scene for a synthetic vision system.

Example 13 includes the navigation system of any of Examples 9-12, wherein incrementally adding the value associated with the navigation system reset comprises adding the value at a constant rate.

Example 14 includes the navigation system of any of Examples 9-13, wherein the value associated with the navigation system reset is equal to the change in the navigation solution due to the navigation system reset.

Example 15 includes the navigation system of any of Examples 9-14, wherein the value associated with the navigation system reset is less than the change in the navigation solution due to the navigation system reset.

Example 16 includes the navigation system of any of Examples 9-15, wherein identifying the un-smoothed navigation solution inclusive of a navigation system reset includes identifying only the navigation system resets that are above a threshold.

Example 17 includes a program product comprising a processor-readable medium on which program instructions are embodied, wherein the program instructions are configured, when executed by at least one programmable processor, to cause the at least one programmable processor: to identify an un-smoothed navigation solution inclusive of a navigation system reset wherein a value is associated with the navigation system reset; to subtract the value associated with the navigation system reset from the un-smoothed navigation solution to generate an initial navigation solution; and to incrementally add the value associated with the navigation system reset to the initial navigation solution at a configurable rate to generate a smoothed navigation solution.

Example 18 includes the program product of Example 17, wherein identifying the un-smoothed navigation solution comprises comparing the un-smoothed navigation solution with a navigation solution using a reference navigation system.

Example 19 includes the program product of Example 18, wherein the reference navigation system includes at least one of: a global navigation satellite system, an inertial navigation system, a Radio Detection and Ranging sensor, and a Light Detection and Ranging sensor.

Example 20 includes the program product of any of Examples 17-19, wherein the smoothed navigation solution is used in creating a scene for a synthetic vision system.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for improving a navigation solution, the method comprising:
identifying an un-smoothed navigation solution inclusive of a navigation system reset, wherein a value is associated with the navigation system reset;
subtracting the value associated with the navigation system reset from the unsmoothed navigation solution to generate an initial navigation solution; and
incrementally adding the value associated with the navigation system reset to the initial navigation solution at a configurable rate to generate a smoothed navigation solution.

2. The method of claim 1, wherein identifying the un-smoothed navigation solution comprises comparing the un-smoothed navigation solution with a navigation solution using a reference navigation system.

3. The method of claim 2, wherein the reference navigation system includes at least one of: a global navigation satellite system, an inertial navigation system, a Radio Detection and Ranging sensor, and a Light Detection and Ranging sensor.

4. The method of claim 1, wherein the smoothed navigation solution is used in creating a scene for a synthetic vision system.

5. The method of claim 1, wherein incrementally adding the value associated with the navigation system reset involves adding the value at a constant rate.

6. A navigation system comprising:
at least one inertial measurement unit configured to provide inertial measurements;
at least one aiding device configured to generate aiding device measurement data;
a memory device configured to store computer readable instructions, and
a navigation processor configured to provide a navigation solution, wherein the navigation processor is coupled to receive the inertial measurements from the inertial measurement unit and the aiding device measurement data from the aiding device, wherein computer readable instructions direct the navigation processor to:
identify an un-smoothed navigation solution inclusive of a navigation system reset wherein a value is associated with the navigation system reset;
subtract the value associated with the navigation system reset from the unsmoothed navigation solution to generate an initial navigation solution; and
incrementally add the value associated with the navigation system reset to the initial navigation solution at a configurable rate to generate a smoothed navigation solution.

7. The navigation system of claim 6, wherein identifying an un-smoothed navigation solution comprises comparing the un-smoothed navigation solution with a navigation solution using a reference navigation system.

8. The navigation system of claim 7, wherein the reference navigation system includes at least one of: a global navigation satellite system, an inertial navigation system, a Radio Detection and Ranging sensor, and a Light Detection and Ranging sensor.

9. The navigation system of claim 8, wherein the smoothed navigation solution is used in creating a scene for a synthetic vision system.

10. The navigation system of claim 6, wherein incrementally adding the value associated with the navigation system reset comprises adding the value at a constant rate.
